# EUROPEAN PATENT APPLICATION

(11) **EP 4 761 320 A1**
(43) Date of publication of application: **17.06.2026**
(21) Application number: 23952765.8
(22) Date of filing: 23.09.2023
(51) Int. Cl.: H04W 24/02

(54) **COMMUNICATION METHOD AND APPARATUS, AND CHIP, CHIP MODULE AND STORAGE MEDIUM**

(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Gill Jennings & Every LLP
(86) International application number: PCT/CN2023/120905
(87) International publication number: WO 2025/060113

(57) **Abstract**

A communication method and apparatus, a chip, a chip module, and a storage medium are provided. After a delay status report is triggered, it is determined whether a first condition or a second condition is satisfied, to determine whether the triggered delay status report is canceled, or the delay status report is assembled or sent, so that the triggered delay status report may be reasonably processed.

## Description

### TECHNICAL FIELD

This application relates to the field of communication technologies, and in particular, to a communication method and apparatus, a chip, a chip module, and a storage medium.

### BACKGROUND

Delay status information (that is, a residual delay of a data packet) may be reported through a new media access control (media access control, MAC) control element (control element, CE). Therefore, a new process is introduced to send a delay status report. When the residual delay of the data packet is less than a threshold, the delay status report is triggered. However, after the delay status report is triggered, if no resource is available for sending the delay status report all the time, there is currently no corresponding solution to how to process the delay status report.

### SUMMARY

This application provides a communication method and apparatus, a chip, a chip module, and a storage medium, to reasonably process a delay status report if no resource is available for sending the delay status report all the time after the delay status report is triggered.

According to a first aspect, a communication method is provided. The method may be performed by a terminal device, or a chip or a circuit configured for the terminal device.

The method includes: triggering a delay status report, where the delay status report is used to indicate delay status information of first data; canceling the triggered delay status report when a first condition is satisfied; or assembling or sending the delay status report when a second condition is satisfied. Through this method, after the delay status report is triggered, it is determined whether the first condition or the second condition is satisfied, to determine whether the triggered delay status report is canceled, or the delay status report is assembled or sent, so that the triggered delay status report may be reasonably processed.

In a possible implementation, the method further includes: starting or restarting a first timer when the delay status report is triggered. Through this implementation, after the delay status report is triggered, the first timer is started. When the first timer is running or not configured, and a resource is available for the delay status report, the delay status report is assembled or sent. When the first timer expires, the triggered delay status report is canceled. Therefore, the delay status report may be assembled or sent when the resource is available, and the triggered delay status report is canceled when no resource is available, so as to reasonably process the triggered delay status report.

In another possible implementation, a duration of the first timer is used to indicate a validity period of the delay status report, or the first timer is used to cancel the delay status report, or the first timer is used to send or assemble the delay status report.

In still another possible implementation, the canceling the triggered delay status report when a first condition is satisfied includes: canceling the triggered delay status report when the first timer expires and the triggered delay status report is still pending; or canceling the triggered delay status report when the first timer corresponding to the triggered delay status report expires; or canceling the triggered delay status report when the first timers corresponding to all first granularities that trigger the delay status report expire; or canceling the triggered delay status report when the first timers corresponding to one or more first granularities that trigger delay status report expire. Through this implementation, it may be determined whether to perform an operation of canceling the triggered delay status report based on a delay status report granularity or the first granularity, so that the triggered delay status report may be processed more accurately and reasonably.

In still another possible implementation, the assembling or sending the delay status report when a second condition is satisfied includes: assembling or sending the delay status report if the triggered delay status report is still pending when the first timer is running or not configured, and a resource is available for the delay status report; or assembling or sending the delay status report when the first timer corresponding to the triggered delay status report is running or not configured, and a resource is available for the delay status report; or assembling or sending the delay status report when the first timers corresponding to all first granularities of the triggered delay status report are running or not configured, and a resource is available for the delay status report; or assembling or sending the delay status report when the first timers corresponding to one or more first granularities of the triggered delay status report are running or not configured, and a resource is available for the delay status report. Through this implementation, it may be determined whether to perform an operation of assembling or sending the triggered delay status report based on the delay status report granularity or the first granularity, so that the triggered delay status report may be processed more accurately and reasonably.

In still another possible implementation, a value of a duration of the first timer is in a unit of any one of symbol, slot, sub-frame, or millisecond. Through this implementation, the value of the duration of the first timer may be set in the unit of the symbol or the slot, so that it may be determined whether to perform an operation of canceling the triggered delay status report, or assembling or sending the delay status report more promptly and accurately, thereby processing the delay status report more promptly.

In still another possible implementation, the value of the duration of the first timer is not 0 milliseconds. Through this implementation, after the delay status report is triggered, it is directly determined whether to perform an operation of canceling the triggered delay status report without a delay, or assembling or sending the delay status report, thereby processing the delay status report more promptly and accurately.

In still another possible implementation, the value of the duration of the first timer is less than or equal to a first threshold. Through this implementation, the value of the duration of the first timer is set to be relatively small, so that the delay status report may be processed more promptly.

In still another possible implementation, the canceling the triggered delay status report when a first condition is satisfied includes: canceling the triggered delay status report when delay status information of the triggered delay status report is less than or equal to the first threshold, or the delay status information of the delay status report is not within a value range of delay status information in a delay status table; or the assembling or sending the delay status report when a second condition is satisfied includes: assembling or sending the delay status report when the delay status information of the triggered delay status report is greater than the first threshold, or the delay status information of the delay status report is within the value range of the delay status information in the delay status table.

In still another possible implementation, the canceling the triggered delay status report when delay status information of the triggered delay status report is less than or equal to the first threshold, or the delay status information of the delay status report is not within a value range of delay status information in a delay status table includes: canceling the triggered delay status report when the delay status information corresponding to one or more first granularities in the triggered delay status report is less than or equal to the first threshold, or the delay status information corresponding to one or more first granularities in the delay status information is not within the value range of the delay status information in the delay status table; or the assembling or sending the delay status report when the delay status information of the triggered delay status report is greater than the first threshold, or the delay status information of the delay status report is within the value range of the delay status information in the delay status table includes: assembling or sending the delay status report when the delay status information corresponding to one or more first granularities in the triggered delay status report is greater than the first threshold, or the delay status information corresponding to one or more first granularities in the delay status report is within the value range of the delay status information in the delay status table. Through this implementation, after the delay status report is triggered, it is determined whether the delay status information corresponding to one or more first granularities in the triggered delay status report may be used to determine how to process the triggered delay status report, so that the triggered delay status report may be reasonably processed.

In still another possible implementation, the canceling the triggered delay status report when a first condition is satisfied includes: canceling the triggered delay status report when data volume information of the triggered delay status report does not exist or is 0; or the assembling or sending the delay status report when a second condition is satisfied includes: assembling or sending the delay status report when data volume information of the triggered delay status report exists or is not 0.

In still another possible implementation, the canceling the triggered delay status report when data volume information of the triggered delay status report does not exist or is 0 includes: canceling the triggered delay status report when data volume information corresponding to one or more pieces of delay status information in the triggered delay status report does not exist or is 0, or data volume information corresponding to the first granularity in the triggered delay status report does not exist or is 0; or the assembling or sending the delay status report when data volume information of the triggered delay status report exists or is not 0 includes: assembling or sending the delay status report when data volume information corresponding to one or more pieces of delay status information in the triggered delay status report exists or is not 0, or data volume information corresponding to the first granularity in the triggered delay status report exists or is not 0. Through this implementation, after the delay status report is triggered, it is determined whether data volume information of the delay status information in the triggered delay status report exists or is not 0, to determine how to process the triggered delay status report, so that the triggered delay status report may be reasonably processed.

In still another possible implementation, the canceling the triggered delay status report when data volume information corresponding to the first granularity in the triggered delay status report does not exist or is 0 includes: canceling the triggered delay status report when data volume information corresponding to delay status information of one or more first granularities in the triggered delay status report does not exist or is 0; or canceling the triggered delay status report when the data volume information corresponding to the delay status information of all first granularities in the triggered delay status report does not exist or is 0.

In still another possible implementation, the assembling or sending the delay status report when data volume information corresponding to the first granularity in the triggered delay status report exists or is not 0 includes: assembling or sending the delay status report when the data volume information corresponding to all delay status information of the first granularity in the triggered delay status report exists or is not 0, and a resource is available for the delay status report; or assembling or sending the delay status report when the data volume information corresponding to one or more pieces of delay status information of the first granularity in the triggered delay status report exists or is not 0, and a resource is available for the delay status report.

In still another possible implementation, the first granularity includes at least one of a logical channel, a logical channel group, a data radio bearer, quality of service, a protocol data unit set, a data burst set, a medium access control entity, or a terminal device.

In still another possible implementation, the delay status information included in the delay status report is greater than or equal to the first threshold, or the delay status information included in the delay status report needs to be within the value range of the delay status information in the delay status table.

In still another possible implementation, when the delay status information of the first data is less than or equal to a second threshold, the delay status report is triggered.

According to a second aspect, a communication method is provided. The method may be performed by a terminal device, or a chip or a circuit configured for the terminal device.

The method includes: receiving first configuration information, where the first configuration information includes one or more of the duration of the first timer according to the first aspect or any one of the implementations of the first aspect, first indication information indicating that the first timer is applied, the first threshold according to the first aspect or any one of the implementations of the first aspect, or second indication information, and the second indication information is used to indicate whether to perform, based on a validity of a data volume of the delay status report, an operation of canceling a delay status report or assembling or sending the delay status report. Through this method, the terminal device receives the duration of the first timer, the first indication information indicating that the first timer is applied, the first threshold, and the second indication information configured by a network device, so that the terminal device may determine to cancel the delay status report, or assemble or send the delay status report based on the configuration of the network device, thereby improving reliability of communication.

The foregoing methods in the first aspect and the second aspect may be performed by the terminal device, or may be performed by a module (for example, a processor, a chip, or a chip system) applied to the terminal device, or may be implemented by a logical node, a logical module, or software that can implement all or some of functions of the terminal device.

According to a third aspect, a communication method is provided. The method may be performed by a network device, or a chip or circuit configured for the network device.

The method includes: sending first configuration information, where the first configuration information includes one or more of the duration of the first timer according to the first aspect or any one of the implementations of the first aspect, first indication information indicating that the first timer is applied, the first threshold according to the first aspect or any one of the implementations of the first aspect, or second indication information, and the second indication information is used to indicate whether to perform, based on a validity of a data volume of the delay status report, an operation of canceling a delay status report or assembling or sending the delay status report. Through this method, the network device configures the duration of the first timer, the first indication information indicating that the first timer is applied, the first threshold, and the second indication information, so that the terminal device may determine to cancel the delay status report, or assemble or send the delay status report based on the configuration of the network device, thereby improving reliability of communication.

The method in the foregoing third aspect may be performed by the network device, or may be performed by a module (for example, a processor, a chip, or a chip system) applied to the network device, or may be implemented by a logical node, a logical module, or software that can implement all or some of functions of the network device.

According to a fourth aspect, a communication apparatus is provided, which is configured to implement the foregoing communication method in any one of the implementations of the first aspect, the second aspect or the first aspect, or the second aspect. The apparatus may be a terminal device, or may be a module (for example, a processor, a chip, or a chip system) applied to a terminal device, or may be a logical node, a logical module, or software that can implement all or some of functions of the terminal device. In an implementation, the communication apparatus may include a sending unit and a receiving unit, and may further include a processing unit. The sending unit and the receiving unit may be independent, or may be combined (which may be referred to as a "transceiver unit").

According to a fifth aspect, a communication apparatus is provided, which is configured to implement the foregoing communication method in the third aspect or any one of the implementations of the third aspect. The apparatus may be a network device, or may be a module (for example, a processor, a chip, or a chip system) applied to a network device, or may be a logical node, a logical module, or software that can implement all or some of functions of the network device. In an implementation, the communication apparatus may include a sending unit and a receiving unit, and may further include a processing unit. The sending unit and the receiving unit may be independent, or may be combined (which may be referred to as a "transceiver unit").

In a possible implementation, the foregoing communication apparatus according to the fourth aspect and the fifth aspect includes a module configured to respectively implement the foregoing method in any one of or any one of the implementations of the first aspect to the third aspect.

When the communication apparatus is configured to implement the method according to the first aspect or any one of the implementations of the first aspect, the communication apparatus includes a processing unit, and may further include a transceiver unit. The processing unit is configured to trigger a delay status report, where the delay status report is used to indicate delay status information of first data. The processing unit is further configured to cancel the triggered delay status report when a first condition is satisfied; or the processing unit is further configured to assemble or send the delay status report when a second condition is satisfied.

Optionally, the processing unit is further configured to start or restart a first timer when the delay status report is triggered.

Optionally, a duration of the first timer is used to indicate a validity period of the delay status report, or the first timer is used to cancel the delay status report, or the first timer is used to send or assemble the delay status report.

Optionally, the processing unit is further configured to: cancel the triggered delay status report when the first timer expires and the triggered delay status report is still pending; or cancel the triggered delay status report when the first timer corresponding to the triggered delay status report expires; or cancel the triggered delay status report when the first timers corresponding to all first granularities that trigger the delay status report expire; or cancel the triggered delay status report when the first timers corresponding to one or more first granularities that trigger delay status report expire.

Optionally, the processing unit is further configured to: assemble or send the delay status report if the triggered delay status report is still pending when the first timer is running or not configured, and a resource is available for the delay status report; or assemble or send the delay status report when the first timer corresponding to the triggered delay status report is running or not configured, and a resource is available for the delay status report; or assemble or send the delay status report when the first timers corresponding to all first granularities of the triggered delay status report are running or not configured, and a resource is available for the delay status report; or assemble or send the delay status report when the first timers corresponding to one or more first granularities of the triggered delay status report are running or not configured, and a resource is available for the delay status report.

Optionally, a value of a duration of the first timer is in a unit of any one of symbol, slot, sub-frame, or millisecond.

Optionally, the value of the duration of the first timer is not 0 milliseconds.

Optionally, the value of the duration of the first timer is less than or equal to a first threshold.

Optionally, the processing unit is further configured to: cancel the triggered delay status report when delay status information of the triggered delay status report is less than or equal to the first threshold, or the delay status information of the delay status report is not within a value range of delay status information in a delay status table; or assemble or send the delay status report when the delay status information of the triggered delay status report is greater than the first threshold, or the delay status information of the delay status report is within the value range of the delay status information in the delay status table.

Optionally, the processing unit is further configured to cancel the triggered delay status report when the delay status information corresponding to one or more first granularities in the triggered delay status report is less than or equal to the first threshold, or the delay status information corresponding to one or more first granularities in the delay status information is not within the value range of the delay status information in the delay status table; or the assembling or sending the delay status report when the delay status information of the triggered delay status report is greater than the first threshold, or the assembling or sending the delay status report when a second condition is satisfied includes: assembling or sending the delay status report when the delay status information corresponding to one or more first granularities in the triggered delay status report is greater than the first threshold, or the delay status information corresponding to one or more first granularities in the delay status report is within the value range of the delay status information in the delay status table.

Optionally, the processing unit is further configured to: cancel the triggered delay status report when data volume information of the triggered delay status report does not exist or is 0; or assemble or send the delay status report when data volume information of the triggered delay status report exists or is not 0.

Optionally, the processing unit is further configured to cancel the triggered delay status report when data volume information corresponding to one or more pieces of delay status information in the triggered delay status report does not exist or is 0, or data volume information corresponding to the first granularity in the triggered delay status report does not exist or is 0; or the assembling or sending the delay status report when a second condition is satisfied includes: assembling or sending the delay status report when data volume information corresponding to one or more pieces of delay status information in the triggered delay status report exists or is not 0, or data volume information corresponding to the first granularity in the triggered delay status report exists or is not 0.

Optionally, the processing unit is further configured to: cancel the triggered delay status report when data volume information corresponding to delay status information of one or more first granularities in the triggered delay status report does not exist or is 0; or cancel the triggered delay status report when the data volume information corresponding to the delay status information of all first granularities in the triggered delay status report does not exist or is 0.

Optionally, the processing unit is further configured to: assemble or send the delay status report when the data volume information corresponding to all delay status information of the first granularity in the triggered delay status report exists or is not 0, and a resource is available for the delay status report; or assemble or send the delay status report when the data volume information corresponding to one or more pieces of delay status information of the first granularity in the triggered delay status report exists or is not 0, and a resource is available for the delay status report.

Optionally, the first granularity includes at least one of a logical channel, a logical channel group, a data radio bearer, quality of service, a protocol data unit set, a data burst set, a medium access control entity, or a terminal device.

Optionally, the delay status information included in the delay status report is greater than or equal to the first threshold, or the delay status information included in the delay status report needs to be within the value range of the delay status information in the delay status table.

Optionally, the processing unit is further configured to trigger the delay status report when the delay status information of the first data is less than or equal to a second threshold.

When the communication apparatus is configured to implement the method according to the second aspect or any one of the implementations of the second aspect, the communication apparatus includes a transceiver unit, or may further include a processing unit. The transceiver unit is configured to receive first configuration information, where the first configuration information includes one or more of the duration of the first timer according to the first aspect or any one of the implementations of the first aspect, first indication information indicating that the first timer is applied, the first threshold according to the first aspect or any one of the implementations of the first aspect, or second indication information, and the second indication information is used to indicate whether to perform, based on a validity of a data volume of the delay status report, an operation of canceling a delay status report or assembling or sending the delay status report.

When the communication apparatus is configured to implement the method according to the third aspect or any one of the implementations of the third aspect, the communication apparatus includes a transceiver unit, or may further include a processing unit. The transceiver unit is configured to send first configuration information, where the first configuration information includes one or more of the duration of the first timer according to the first aspect or any one of the implementations of the first aspect, first indication information indicating that the first timer is applied, the first threshold according to the first aspect or any one of the implementations of the first aspect, or second indication information, and the second indication information is used to indicate whether to perform, based on a validity of a data volume of the delay status report, an operation of canceling a delay status report or assembling or sending the delay status report.

In another possible implementation, the foregoing communication apparatus in the fourth aspect and the fifth aspect includes a processor coupled to a memory, where the processor is configured to implement that the apparatus performs a corresponding function in the foregoing communication method. The memory is configured to be coupled to the processor, and stores a program (an instruction) and/or data that are necessary for the apparatus. Optionally, the communication apparatus may further include a communication interface configured to implement communication between the apparatus and another network element. Optionally, the memory may be located in the communication apparatus, or may be located outside the communication apparatus.

In still another possible implementation, the foregoing communication apparatus in the fourth aspect and the fifth aspect includes a processor and a transceiver apparatus. The processor is coupled to the transceiver apparatus. The processor is configured to execute a computer program or an instruction, to control the transceiver apparatus to receive and send information. When the processor executes the computer program or the instruction, the processor is further configured to implement the foregoing method through a logical circuit or by executing a code instruction. The transceiver apparatus may be a transceiver, a transceiver circuit, or an input/output interface, which is configured to receive a signal from another communication apparatus other than the communication apparatus or send a signal from the processor to another communication apparatus other than the communication apparatus. When the communication apparatus is a chip, the transceiver apparatus is a transceiver circuit or an input/output interface.

When the foregoing communication apparatus in the fourth aspect and the fifth aspect is a chip, the sending unit may be an output unit, such as an output circuit or a communication interface, and the receiving unit may be an input unit, such as an input circuit or a communication interface. When the communication apparatus is a terminal, the sending unit may be a transmitter, and the receiving unit may be a receiver.

According to a sixth aspect, a computer-readable storage medium is provided, storing a computer program or an instruction. When the computer program or the instruction is executed, the methods in the foregoing aspects are implemented.

According to a seventh aspect, a computer program product including an instruction is provided. The instruction, when executed on a communication apparatus, causes the communication apparatus to perform the methods in the foregoing aspects.

According to an eighth aspect, a communication system is provided, including the communication apparatus in the fourth aspect and the communication apparatus in the fifth aspect.

### BRIEF DESCRIPTION OF DRAWINGS

FIG. 1A is a schematic diagram of an architecture of a communication system according to an embodiment of this application;
FIG. 1B is a schematic diagram of an architecture of another communication system according to an embodiment of this application;
FIG. 2 is a schematic diagram of an architecture of still another communication system according to an embodiment of this application;
FIG. 3 is a schematic diagram of a format of a delay status report according to an embodiment of this application;
FIG. 4 is a schematic diagram of information invalidation in a delay status report according to an example of an embodiment of this application;
FIG. 5 is a schematic flowchart of a communication method according to an embodiment of this application;
FIG. 6 is a schematic flowchart of another communication method according to an embodiment of this application;
FIG. 7 is a schematic diagram of canceling a triggered delay status report when a first timer expires according to an example of an embodiment of this application;
FIG. 8A is a schematic diagram of an example of canceling a triggered delay status report;
FIG. 8B is a schematic diagram of another example of canceling a triggered delay status report;
FIG. 9 is a schematic diagram of different LCGs corresponding to different delay thresholds according to an example of an embodiment of this application;
FIG. 10A is a schematic diagram of configuring a timer through a delay status report granularity according to an example of an embodiment of this application;
FIG. 10B is a schematic diagram of configuring a timer through an LCG granularity according to an example of an embodiment of this application;
FIG. 11 is a schematic flowchart of still another communication method according to an embodiment of this application;
FIG. 12 is a schematic diagram of processing a triggered delay status report based on delay status information corresponding to an LCG;
FIG. 13 is a schematic flowchart of still another communication method according to an embodiment of this application;
FIG. 14 is a schematic diagram of discarding of a PDU according to an example of an embodiment of this application;
FIG. 15 is a schematic flowchart of still another communication method according to an embodiment of this application;
FIG. 16 is a schematic structural diagram of a communication apparatus according to an embodiment of this application; and
FIG. 17 is a schematic structural diagram of another communication apparatus according to an embodiment of this application.

### DESCRIPTION OF EMBODIMENTS

The solution provided in embodiments of this application is described below in detail with reference to the accompanying drawings.

At least one (item) involved in this application below means one (item) or more (items). "A plurality of (items)" means two (items) or more (items). A term "and/or" means an association relationship for describing associated objects and represents that three relationships may exist. For example, A and/or B may represent the following three cases: only A exists, both A and B exist, and only B exists. A character "/" generally indicates an "or" relationship between associated objects. In addition, it should be understood that although the terms such as "first" and "second" may be used in this application to describe various objects, the objects should not be limited to these terms. These terms are merely used to distinguish between the objects.

The terms "include", "have", and any variant thereof in the description of this application below are intended to cover a non-exclusive inclusion. For example, a process, a method, a system, a product, or a device that includes a series of steps or units is not limited to the listed steps or units, and instead, optionally further includes another step or unit that is not listed, or optionally further includes another step or unit that is intrinsic to the process, method, product, or device. It should be noted that, in this application, words such as "in an example" or "for example" represent giving an example, an illustration, or a description. Any method or design solution described as "in an example" or "for example" in this application should not be explained as being more preferred or having more advantages than another method or design solution. Exactly, use of the words such as "in an example" or "for example" are intended to present a related concept in a specific manner.

The technology provided in this application may be applied to various communication systems. For example, the communication system may be a fourth generation (4^{th} generation, 4G) communication system (for example, a long term evolution (long term evolution, LTE) system), a fifth generation (5^{th} generation, 5G) communication system, a worldwide interoperability for microwave access (worldwide interoperability for microwave access, WiMAX) system or a wireless local area network (wireless local area network, WLAN) system, or a converged system of multiple systems, or a future communication system, for example, a 6G communication system. The 5G communication system may also be referred to as a new radio (new radio, NR) system.

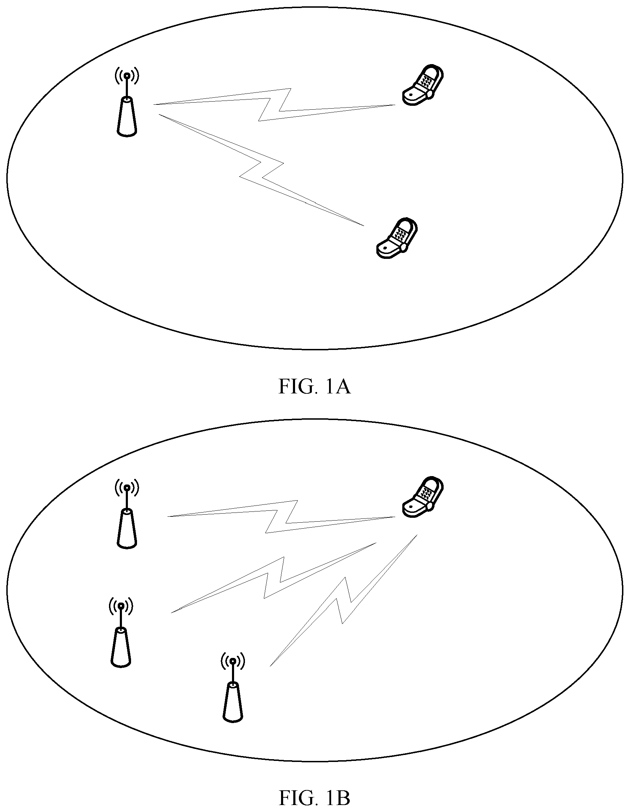

FIG. 1A is a schematic diagram of a communication system according to an embodiment of this application. The communication system may include one or more network devices (only 1 network device is shown in the figure) and one or more terminal devices connected with the network devices. One network device may transmit data or control signaling to one or more terminal devices. In another communication system shown in FIG. 1B, a plurality of network devices may also simultaneously transmit data or control signaling to one terminal device.

In the foregoing communication system, the network device may be any device having a radio transceiver function, and includes, but is not limited to, a base station (NodeB), an evolved base station (eNodeB), a base station in a 5G communication system, a base station or a network device in a future communication system, an access node in a Wi-Fi system, a wireless relay node, a wireless backhaul node, or the like. The network device may also be a radio controller in a cloud radio access network (cloud radio access network, CRAN) scenario. The network device may also be a small station, a transmission point (transmission reference point, TRP), or the like. Embodiments of this application impose no limitation on a specific technology and a specific device form used by the network device.

The terminal device is a device with a wireless transceiver function, and may be deployed on land (including indoor or outdoor), or handheld, worn, or vehicle-mounted; or may be deployed on a water surface, for example, a ship; or may also be deployed in the air, for example, an airplane, a balloon, or a satellite. The terminal device may be a mobile phone (mobile phone), a tablet computer (pad), a computer with a wireless transceiver function, a wearable device, an unmanned aerial vehicle, a helicopter, an airplane, a ship, a robot, a robot arm, a smart home device, a virtual reality (virtual reality, VR) terminal device, an augmented reality (augmented reality, AR) terminal device, a wireless terminal device in industrial control (industrial control), a wireless terminal device in self-driving (self-driving), a vehicle, a functional module in a vehicle, a wireless terminal device in a remote medical (remote medical), a wireless terminal device in a smart grid (smart grid), a wireless terminal device in transportation safety (transportation safety), a wireless terminal device (for example, a street lamp) in a smart city (smart city), a wireless terminal device in a smart home (smart home), or the like. An application scenario is not limited in embodiments of this application. Sometimes, the terminal device may also be referred to as user equipment (user equipment, UE), an access terminal device, a UE unit, a mobile station, a mobile console, a remote station, a remote terminal device, a mobile device, a terminal device (terminal), a wireless communication device, a UE proxy, a UE apparatus, or the like. A specific technology and a specific device form used by a terminal device are not limited in embodiments of this application.

Optionally, in embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software. In addition, a specific structure of an execution body of a method provided in embodiments of this application is not specifically limited in embodiments of this application, provided that a program that records codes of the method provided in embodiments of this application can be run to perform communication according to the method provided in embodiments of this application. For example, the execution body of the method provided in embodiments of this application may be a terminal device or a network device, or a function module that can call and execute a program in a terminal device or a network device.

In other words, a related function of the terminal device or the network device in embodiments of this application may be implemented by one device, or may be jointly implemented by a plurality of devices, or may be implemented by one or more functional modules in a device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

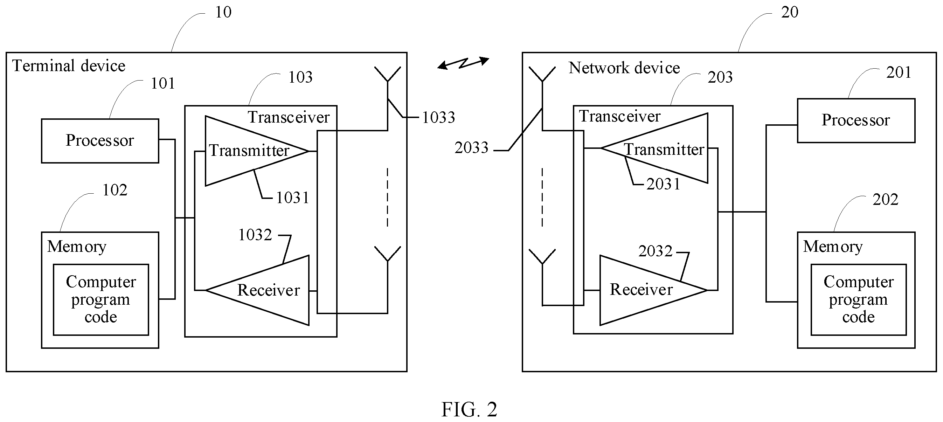

Communication between the network device and the terminal device in the communication system shown in FIG. 1A and FIG. 1B may also be represented in another form. As shown in FIG. 2, the terminal device 10 includes a processor 101, a memory 102, and a transceiver 103. The transceiver 103 includes a transmitter 1031, a receiver 1032, and an antenna 1033. The network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033. The transmitter 1031 may be configured to send transmission feedback information to the network device 20 through the antenna 1033. The transmitter 2031 may be configured to send, through the antenna 2033, transmission control information to the terminal device 10. The receiver 2032 may be configured to receive, through the antenna 2033, transmission feedback information sent by the terminal device 10.

The processor 101/the processor 201 may be a CPU, a microprocessor, an application-specific integrated circuit (application-specific integrated circuit, ASIC), or one or more integrated circuits configured to control program execution of the solutions in this application.

The memory 102/the memory 202 may be an apparatus with a storage function. For example, the memory may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. The memory may exist independently, and is connected to the processor through a communication line. Alternatively, the memory may be integrated with the processor.

The memory 102/the memory 202 is configured to store a computer-executable instruction for executing the solutions of this application, and the processor 101/the processor 201 controls execution. The processor 101/the processor 201 is configured to execute the computer-executable instruction stored in the memory 102/the memory 202, to implement the communication method provided in embodiments of this application.

Alternatively, in embodiments of this application, the processor 101/the processor 201 may perform a processing-related function in the communication method provided in the following embodiments of this application.

The computer-executable instruction in embodiments of this application may also be referred to as application program code. This is not specifically limited in embodiments of this application.

For some services such as an augmented reality (extended reality, XR) (whose service features mainly include a non-integer period, an arrival time jitter, a variable data packet size, a multi-stream service, and a relatively large data volume) and a cloud gaming (cloud gaming) service, a relatively high delay requirement is imposed. Therefore, when the residual delay of the data is less than or equal to a threshold, the UE triggers the delay status report. The delay status report in this application may be used to report any report related to delay status information. For example, the report may be referred to as a delay status report (delay status report, DSR). Certainly, the report may also be another name. This is not limited in this application.

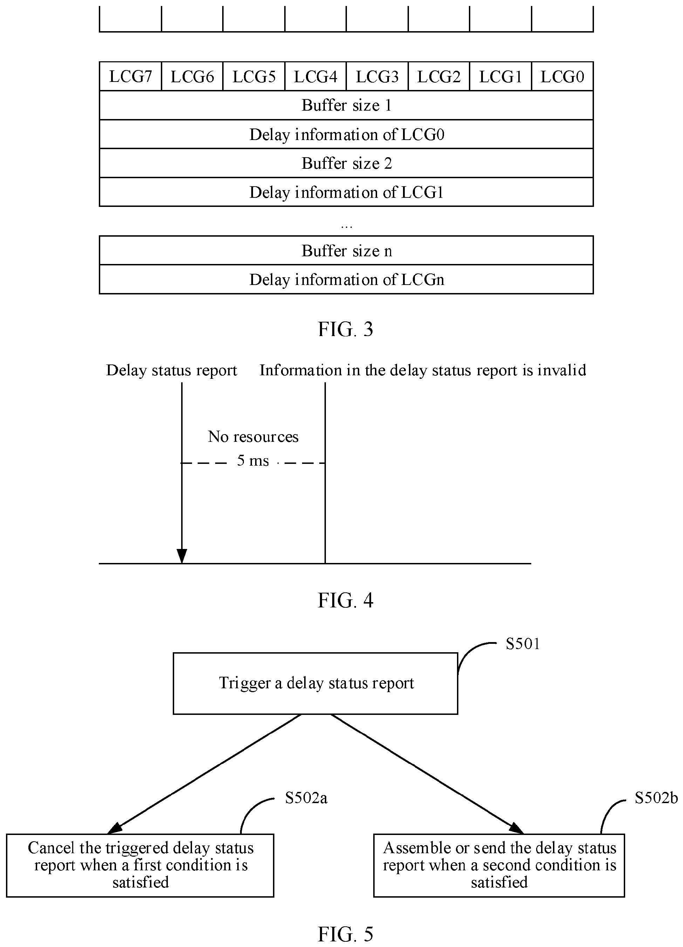

FIG. 3 is a schematic diagram of a format of a delay status report according to an embodiment of this application. The foregoing data may be carried in a plurality of LCGs, and the delay status report may include data volume information (that is, a buffer size (buffer size) shown in FIG. 3) and delay status information of the plurality of LCGs. FIG. 3 illustrates data volume information and delay status information of LCG0-LCG7.

The delay status report may be carried in a new MAC CE. After a UE triggers the delay status report, the UE assembles or sends the delay status report on the resource if a resource exists. "Assembly" may also be understood as "generation". In other words, the delay status report of the foregoing format is assembled or generated. After the UE triggers the delay status report, information in the delay status report may become invalid if no resource is available for sending the delay status report all the time. FIG. 4 is a schematic diagram of information invalidation in a delay status report. After triggering the delay status report, the UE waits for 5 ms. If no resource is available for sending the delay status report all the time, the UE determines that the information in the delay status report becomes invalid.

When only one LCG has delay status information to be transmitted in the delay status report, the UE reports a delay status report of a short format. When more than one LCG has delay status information to be transmitted in the delay status report, the UE reports a delay status report of a long format.

For the problem of how to process if no resource is available for sending the delay status report all the time after the UE triggers the delay status report, this application provides a communication solution. After the UE triggers the delay status report, it is determined whether a first condition or a second condition is satisfied, to determine whether the triggered delay status report is canceled, or the delay status report is assembled or sent, so that the UE may reasonably process the triggered delay status report.

Based on the foregoing communication system, a communication method provided in embodiments of this application is described below.

In this application, "sending information to ... (for example, a UE)" or a related description in the accompanying drawings may be understood as that a destination terminal of the information is the UE. Directly or indirectly sending information to the UE may be included. "Receiving information from ... (for example, the UE)" or "receiving information from ... (for example, the UE)", or the related description in the accompanying drawings may be understood as that a source terminal of the information is the UE, which may include directly or indirectly receiving information from the UE. Necessary processing, such as format change, may be performed on information between the source terminal and the destination terminal for sending the information, but the destination terminal may be understood as effective information from the source terminal. Similar descriptions in this application may be understood similarly, and details are not described herein again.

The communication method provided in embodiments of this application is described in detail below. It may be understood that, in this application, an example in which the UE and the network device are used as execution bodies of the interaction description is used for description, but this application does not limit the execution bodies of the interaction description. For example, the UE in the method provided in this application may also be a chip, a chip system, or a processor applied to the UE, or may be a logical node, a logical module, or software that can implement all or some of the UE. The network device in the method provided in this application may also be a chip, a chip system, or a processor applied to the network device, or may be a logical node, a logical module, or software that can implement all or some functions of the network device.

It may be understood that, in the foregoing embodiments, the methods and/or the steps implemented by the UE may also be implemented by a component (for example, a chip or a circuit) that can be used in the UE, and the methods and/or the steps implemented by the network device may also be implemented by a component (for example, a chip or a circuit) that can be used in the network device.

FIG. 5 is a schematic flowchart of a communication method according to an embodiment of this application. In an example, the method may include the following steps.

S501: Trigger a delay status report. The delay status report is used to indicate delay status information of first data.

In an implementation, the delay status report may be any report including delay status information. As long as a message transfers the delay status information, the message may be the delay status report. Therefore, the delay status report may be a MAC CE, downlink control information (downlink control information, DCI), a radio resource control (radio resource control, RRC) message, a packet data convergence protocol (packet data convergence protocol, PDCP) CE, or the like. In an implementation, the delay status report may be a DSR.

In an implementation, the delay status information may be a residual delay, a maintenance delay, a buffer delay, or the like. Any information related to the delay may be referred to as the delay status information.

In an implementation, the first data is uplink data, downlink data, or non-access stratum (non-access stratum, NAS) data. The first data may be control plane data, user plane data, a data packet, signaling, data transmitted in a signaling radio bearer (signalling radio bearer, SRB), or data transmitted in a data radio bearer (data radio bearer, DRB).

In an example, the UE triggers the DSR. The DSR is used to indicate the delay status information of the first data.

In an example, a scenario of triggering the delay status report may be as follows.

When the delay status information of first data is less than or equal to a second threshold, the delay status report is triggered.

In an implementation, a PDCP layer of the UE receives the first data, and the delay status information of the first data is less than or equal to a threshold. In this case, the PDCP layer transmits indication information to an MAC layer, to instruct to trigger the DSR. After receiving the indication information, the MAC layer triggers the DSR.

In an implementation, when the MAC layer of the UE determines that the delay status information of the first data is less than or equal to a threshold, the delay status report is triggered.

After the delay status report is triggered, one of the following steps S502a or S502b is selected to be performed based on different conditions.

S502a: Cancel the triggered delay status report when a first condition is satisfied.

The first condition may be related to one or more of a validity period of the delay status report, the delay status information corresponding to the LCG in the delay status report, the data volume information corresponding to the delay status information in the delay status report, and no resource being available for the delay status report. Therefore, it may be determined that the delay status report or the delay status information is invalid through the first condition. When it is considered that the delay status report or the delay status information is invalid, the triggered delay status report may be canceled.

In an example, after the UE triggers the DSR, some conditions may exist. For example, no resource is available for the DSR, or the DSR does not need to be sent again. Therefore, when it is determined that the first condition is satisfied, the UE cancels the triggered DSR.

S502b: Assemble or send the delay status report when a second condition is satisfied.

The second condition may be related to one or more of the validity period of the delay status report, the delay status information corresponding to the LCG in the delay status report, and the data volume information corresponding to the delay status information in the delay status report. Therefore, it may be determined that the delay status report or the delay status information is valid through the second condition. When it is considered that the delay status report or the delay status information is valid, the delay status report may be assembled or sent.

Assembling the delay status report may also be referred to as generating the delay status report. Assembling the delay status report may also be filling delay status information in the delay status report or including delay status information that satisfies a certain condition (for example, the second condition) in the delay status report.

In an example, when the UE triggers the DSR, no resource is available for the DSR, but after the UE waits for a duration, the network device configures a resource for the UE to send the DSR. Alternatively, after the UE triggers the DSR for a period of time, the information of the DSR is still valid. Therefore, when it is determined that second condition is satisfied, the UE may assemble or send the DSR.

In an example, when the UE triggers the delay status report, it is determined that a resource is available for the delay status report. In this case, if the delay status information of the delay status report is valid, the delay status report may be assembled or sent. When the UE triggers the delay status report, it is determined that no resource is available for the delay status report. Therefore, a period of time may be waited for, and the triggered delay status report is canceled if no resource may still be available for the delay status report after a period of time. Alternatively, after waiting for a period of time, although a resource is available for the delay status report, the delay status information corresponding to the LCG in the delay status report is less than or equal to a threshold, or the data volume information corresponding to the delay status information does not exist in the delay status report, the triggered delay status report is canceled.

It may be understood that a time interval may exist or no time interval exists between triggering the delay status report and canceling the triggered delay status report, or assembling or sending the delay status report.

According to a communication method provided in this embodiment of this application, after the delay status report is triggered, it is determined whether the first condition or the second condition is satisfied, to determine whether the triggered delay status report is canceled, or the delay status report is assembled or sent, so that the triggered delay status report may be reasonably processed.

Under which condition the triggered delay status report is canceled, and under which condition the delay status report is assembled or sent, a plurality of implementation methods may exist. Descriptions are respectively provided below.

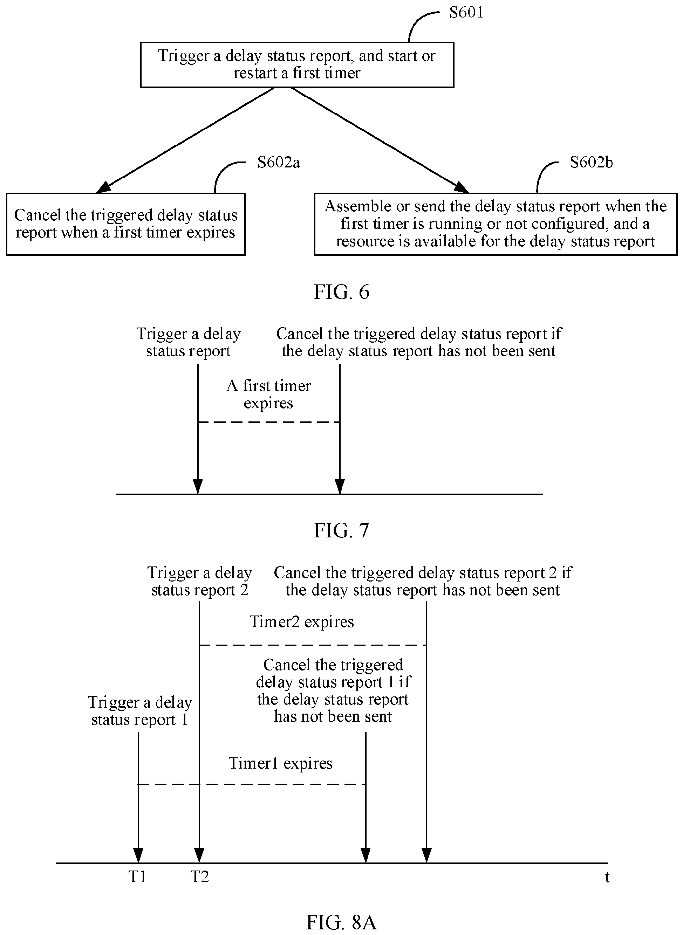

FIG. 6 is a schematic flowchart of another communication method according to an embodiment of this application. In an example, the method may include the following steps.

S601: Trigger a delay status report, and start or restart a first timer. The delay status report is used to indicate delay status information of data.

For a specific implementation of triggering the delay status report, reference may be made to step S501 in the embodiment shown in FIG. 5. Details are not described herein again.

When it is determined that the first timer is started, it may be determined that the first timer corresponding to the triggered delay status report is started, or it may be determined that the first timer corresponding to the first granularity of the delay status report is triggered to be started. A specific example is as follows.

In this embodiment, the network device may configure the first timer. Further, the network device may further send first indication information, which is used to instruct to apply the first timer. The UE starts or restarts the first timer only when the configuration and the first indication information are received and the delay status report is triggered. In other words, if the UE only receives the configuration but does not receive the first indication information, the first timer is not started or restarted when the delay status report is triggered. In an implementation, if the first granularity that triggers the delay status report is configured with the corresponding first timer, the first timer is started or restarted. If the first granularity that triggers the delay status report is not configured with the corresponding first timer, the first timer is not started or restarted when the first granularity of the delay status report is triggered.

In an implementation, a duration of the first timer is used to indicate a validity period of the delay status report. Because the resource is not necessarily available for the delay status report after the delay status report is triggered, the UE waits for a duration and then sends the delay status report. Therefore, the validity period may be a time period in which the UE waits for the resource available for sending the delay status report, and may also be explained as a validity period of the delay status report after the delay status report is triggered or a validity period of the delay status information indicated in the delay status report.

In an implementation, the first timer is used to cancel the delay status report, or the first timer is used to send or assemble the delay status report.

In an example, a value of a duration of the first timer may be in a unit of a symbol, a slot, a sub-frame, a millisecond, or the like. In this embodiment, the value of the duration of the first timer may be set in the unit of the symbol or the slot, so that it may be determined whether to perform an operation of canceling the triggered delay status report, or assembling or sending the delay status report more promptly and accurately, thereby processing the delay status report more promptly.

In an example, the value of the duration of the first timer cannot be 0 ms. In other words, after the delay status report is triggered, it is directly determined whether to perform an operation of canceling the triggered delay status report without a delay, or assembling or sending the delay status report, thereby processing the delay status report more promptly and accurately.

In an example, the value of the duration of the first timer may be a value range. In an example, the value of the duration of the first timer is less than or equal to a first threshold, and a value of the first timer may be an integer or a decimal. For example, if the value of the first timer is the integer, a data structure thereof is of an integer type, and the value is [A, B]. In this case, any integer between A and B may be configured. The threshold is used to trigger the delay status report.

In an example, the first timer may be of an enumeration type or an integer type.

In an implementation, after the delay status report is triggered, the first timer may be started or restarted when no resource is available for the delay status report.

In an implementation, a configuration granularity of the first timer is a first granularity. It may be understood that a corresponding timer is configured for the first granularity.

The first timer may be configured to determine whether to perform an operation of canceling the triggered delay status report, or assembling or sending the delay status report. After the UE triggers the DSR and starts the first timer, one of the following steps S602a or S602b is selected to be performed.

It should be noted that, before S602a or S602b is performed, S601 may be performed or not performed. In an implementation, S601, S602a, or S602b may be an independent solution. In an implementation, after S601 is performed, S602a or S602b is performed.

S602a: Cancel the triggered delay status report when a first timer expires.

When it is determined that the first timer expires, it may be determined that the first timer corresponding to the triggered delay status report expires, or it may be determined that the first timer corresponding to the first granularity that triggers the delay status report expires. A specific example is as follows.

In a first implementation, the first timer expires. If the triggered delay status report is still pending (pending), the triggered delay status report is canceled. The delay status report is still pending, that is, neither canceled nor sent. In this case, the delay status report may be canceled. In an example, FIG. 7 is a schematic diagram of canceling a triggered delay status report when a first timer expires. If the first timer expires and the delay status report is not sent yet, the triggered delay status report is canceled.

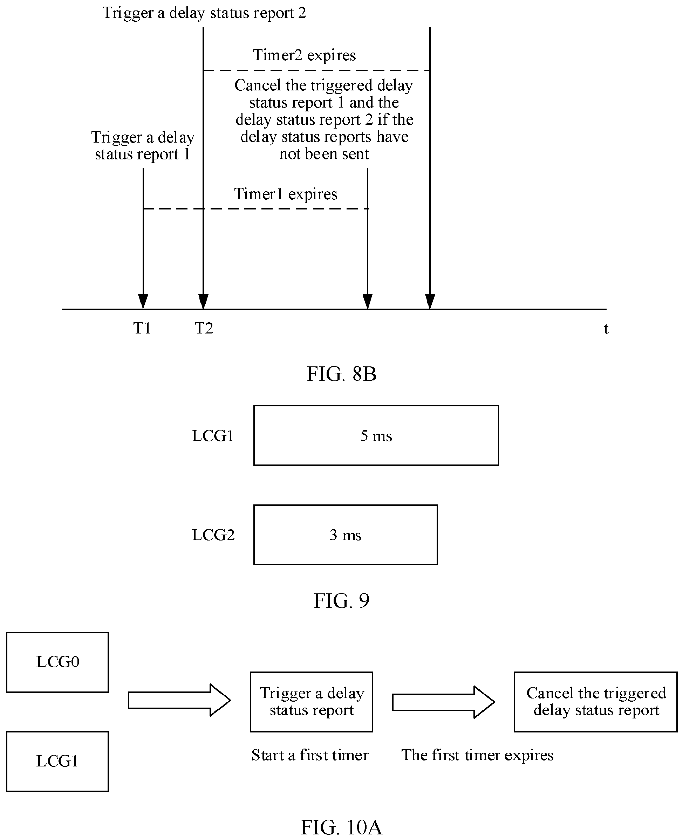

In a second implementation, when the first timer corresponding to the triggered delay status report expires, the triggered delay status report is canceled. The cancellation is of a delay status report granularity (per DSR). In this case, the triggered delay status report corresponds to one first timer. If the first timer of the delay status report expires, the delay status report is canceled. For example, FIG. 8A is a schematic diagram of an example of canceling a triggered delay status report. When a delay status report 1 is triggered at a moment T1, the delay status report 1 has corresponding Timer1 thereof. When a delay status report 2 is triggered at a moment T2, the delay status report 2 has corresponding Timer2 thereof. When the Timer1 expires, only the delay status report 1 is canceled and the delay status report 2 is not canceled. In another implementation, FIG. 8B is a schematic diagram of another example of canceling a triggered delay status report. When the delay status report 1 is triggered at the moment T1, the Timer1 is started, and when the delay status report 2 is triggered at the moment T2, the Timer1 is restarted. The moment T2 is later than the moment T1. In this case, if the Timer1 expires, all triggered delay status reports are canceled. Therefore, that the first timer corresponding to the triggered delay status report expires may be referred to as that the first timer corresponding to the latest triggered delay status report expires.

In a third implementation, when the first timers corresponding to all first granularities that trigger the delay status report expire, the triggered delay status report is canceled. The cancellation is of the first granularity. In an example, the first granularity is an LCH/an LCG/a data radio bearer (data radio bearer, DRB)/quality of service (quality of service, QoS)/a protocol data unit set (PDU set)/a data burst, and it may be obtained that the first granularity is a channel, a data flow, or a data set for transmission data. In an example, in this case, each LCH/LCG of the triggered delay status report corresponds to one first timer. If the first timers corresponding to all LCHs/LCGs of the delay status report expire, the delay status report is canceled. For example, when the delay status report is triggered at the moment T1, LCG1 of the delay status report has a corresponding Timer1 thereof, and LCG2 of the delay status report has the corresponding Timer2 thereof. When the Timer1 expires, the delay status report is not canceled. When the Timer1 and the Timer2 expire, the delay status report is canceled. Therefore, that the first timers corresponding to all LCHs/LCGs of the triggered delay status report expire may be referred to as that the first timers corresponding to all LCHs/LCGs of the latest triggered delay status report expire.

In a fourth implementation, when the first timers corresponding to one or more first granularities that trigger delay status report expire, the triggered delay status report is canceled. The cancellation is also of the first granularity. A difference is that if the first timers corresponding to one or more first granularities in all first granularities that trigger delay status report expire, the triggered first time delay status report is canceled. In an example, the first granularity is an LCH/an LCG/a DRB/QoS/a PDU set/a data burst. In an example, in this case, each LCH/LCG of the triggered delay status report corresponds to one first timer. If the first timers corresponding to one or more LCHs/LCGs in all LCHs/LCGs of the delay status report expire, the triggered delay status report is canceled.

The first implementation to the fourth implementation above may be independent solutions or combined solutions.

When the first timer expires, the triggered delay status report is canceled. In an example, if the first timer expires and the resource cannot be available for the delay status report, for example, if the network device does not configure the resource available for the delay status report, the triggered delay status report is canceled.

S602b: Assemble or send the delay status report when the first timer is running or not configured, and a resource is available for the delay status report.

In an example, if the first timer is running and the network device configures the resource available for the delay status report, the UE may assemble or send the delay status report. That a resource is available for the delay status report means that the resource may be used for transmission (new transmission or retransmission), and the resource can accommodate the delay status report.

In an example, in step S601, based on the introduction of a first timer mechanism, the network device does not configure the first timer. Therefore, after the UE triggers the delay status report, the UE may assemble or send the delay status report when a resource is available for the delay status report.

If it is determined that the first timer is running or not configured, it may be determined that the first timer corresponding to the triggered delay status report is running or not configured, or it may be determined that the first timer corresponding to the first granularity that triggers the delay status report is running or not configured. A specific example is as follows.

In a first implementation, the delay status report is assembled or sent if the triggered delay status report is still pending when the first timer is running or not configured, and a resource is available for the delay status report.

In a second implementation, the delay status report is assembled or sent when the first timer corresponding to the triggered delay status report is running or not configured, and a resource is available for the delay status report. The assembling or sending is of a delay status report granularity (per DSR). In this case, the triggered delay status report corresponds to one first timer. If the first timer of the delay status report is running or not configured, and a resource is available for the delay status report, the delay status report is assembled or sent. For example, if a delay status report 1 is triggered at a moment T1, the delay status report 1 has corresponding Timer1 thereof, and if a delay status report 2 is triggered at a moment T2, the delay status report 2 has corresponding Timer2 thereof. When the Timer1 is running or not configured, and a resource is available for the delay status report 1, the delay status report 1 is assembled or sent. When the Timer2 is running or not configured, but no resource is yet used for the delay status report 2, a resource is still waited for or the Timer2 is waited for expiring.

In a third implementation, the delay status report is assembled or sent when the first timers corresponding to all first granularities that triggers the delay status report are running or not configured, and a resource is available for the delay status report. The assembling or sending is of the first granularity. In an example, the first granularity is an LCH/an LCG/a DRB/QoS/a PDU set/a data burst, and it may be obtained that the first granularity is a channel, a data flow, or a data set for transmission data. In an example, in this case, each LCH/LCG of the triggered delay status report corresponds to one first timer. If the first timers corresponding to all LCHs/LCGs of the delay status report are running or not configured, and a resource is available for the delay status report, the delay status report is assembled or sent. For example, if the delay status report is triggered at the moment T1, LCG1 of the delay status report has corresponding Timer1 thereof, and LCG2 of the delay status report has corresponding Timer2 thereof. When the Timer1 and the Timer2 are running or not configured, and a resource is available for the delay status report, the delay status report is assembled or sent. When the Timer2 is running or not configured, but the Timer1 expires, and a resource is available for the delay status report, the triggered delay status report is canceled.

FIG. 9 is a schematic diagram of different LCGs corresponding to different delay thresholds. A delay threshold corresponding to the LCG1 is 5 ms, and a delay threshold corresponding to the LCG2 is 3 ms. In this case, if the LCG1 and the LCG2 trigger the delay status report simultaneously or continuously within a very short time, the latest triggered delay status report includes the delay status information in the LCG1 and the LCG2. If the timer 1 is configured based on the delay threshold of the LCG2, a duration of the timer 1 may be configured to be 3 ms. In this case, the delay status information in the LCG1 may still be valid when the timer 1 expires. Therefore, configuring different timers for the LCG1 may help better deal with the problem of validity of the delay status information of each LCG.

In a fourth implementation, the delay status report is assembled or sent when the first timers corresponding to one or more first granularities that trigger the delay status report are running or not configured, and a resource is available for the delay status report. The assembly or sending is also of the first granularity. A difference is that when the first timers corresponding to one or more first granularities in all first granularities that trigger the first delay status report are running or not configured, and a resource is available for the delay status report, the delay status report may be assembled or sent. In an example, the first granularity is an LCH/an LCG/a DRB/QoS/a PDU set/a data burst. In an example, in this case, each LCH/LCG of the triggered delay status report corresponds to one first timer. If the first timers corresponding to one or more LCHs/LCGs in all LCHs/LCGs of the delay status report are running or not configured, and a resource is available for the delay status report, the delay status report is assembled or sent. For example, if the delay status report is triggered at the moment T1, the LCG1 of the delay status report has corresponding Timer1 thereof, and the LCG2 of the delay status report has the corresponding Timer2 thereof. When the Timer1 and the Timer2 are running or not configured, and a resource is available for the delay status report, the delay status report is assembled or sent. When the Timer2 is running or not configured, but the Timer1 expires, and a resource is available for the delay status report, the delay status report is assembled or sent.

The first implementation to the fourth implementation above may be independent solutions or combined solutions.

In an example, the foregoing granularity configured by the first timer may be of a granularity such as an LCG/an LCH/a delay status report/QOS/a PDU set/a data burst. In an example, the network device may configure one first timer for the entire delay status report, may configure one first timer for each triggered delay status report, may respectively configure one timer for each LCG involved in the delay status report, or may respectively configure one timer for each LCH in each LCG involved in the delay status report. An LCG may include one or more LCHs.

Based on the foregoing analysis, when the delay threshold or the requirement configured for each granularity is different, configuration of the timer through the delay status report granularity may reduce complexity of configuration. FIG. 10A is a schematic diagram of configuring a timer through a delay status report granularity. LCG0 and LCG1 are involved in the delay status report, and delay thresholds corresponding to the LCG0 and the LCG1 may be the same or different. In this example, the first timer is configured by using the delay status report as the granularity. In other words, one timer is configured for all LCGs in the delay status report. A PDCP layer of the UE receives the first data, and the delay status information of the first data is less than or equal to a threshold. In this case, the PDCP layer transmits indication information to an MAC layer, to instruct to trigger the delay status report. After the MAC layer receives the indication information, or the MAC layer determines that the delay status information is less than or equal to a threshold, the delay status report is triggered for the data. When triggering the delay status report, the UE starts or restarts the first timer. When the first timer expires, the UE cancels the triggered delay status report. When the first timer corresponding to the triggered delay status report is running or not configured, and a resource is available for the delay status report, the UE assembles or sends the delay status report.

It may be obtained based on the foregoing example that configuring the first timer for different granularities is determined based on whether a delay requirement of each granularity is similar or consistent. For example, when the delay requirement of each PDU set is inconsistent, a corresponding timer needs to be configured for each PDU set.

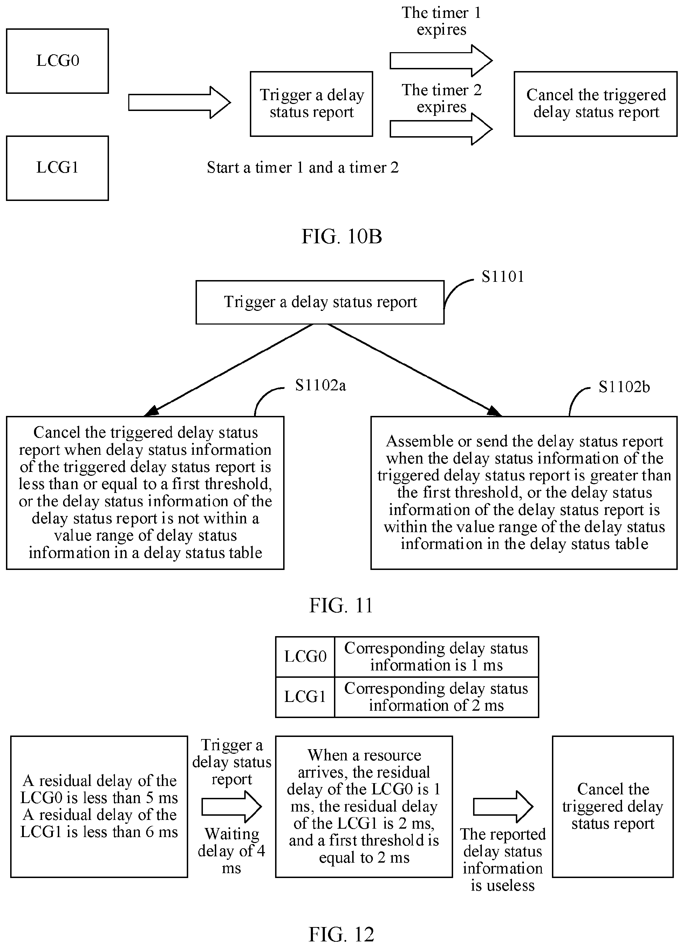

When the granularity configured by the timer is an LCG, one delay status report may involve a plurality of LCGs. In an implementation, only when timers corresponding to all LCGs involved in the triggered delay status report expire, the UE cancels the triggered delay status report. FIG. 10B is a schematic diagram of configuring a timer through an LCG granularity. The network device configures a timer 1 for LCG0 and configures a timer 2 for LCG1. The timer 1 and the timer 2 may have different durations. In this case, when triggering the delay status report, the UE starts the timer 1 and the timer 2. Only after the timer 1 and the timer 2 both expire, the UE cancels the triggered delay status report. A PDCP layer of the UE receives first data, and the delay status information of one or more LCGs in the first data is less than or equal to a threshold. In this case, the PDCP layer transmits indication information to an MAC layer, to instruct to trigger the delay status report. After the MAC layer receives the indication information, or the MAC layer determines that the delay status information of one or more LCGs is less than or equal to a threshold, the delay status report is respectively triggered for the one or more LCGs, and a timer corresponding to the LCG is simultaneously started or restarted. When timers corresponding to one or more LCGs in the one or more LCGs are running or not configured, and a resource is available for the delay status report, the UE assembles or sends the delay status report. When timers corresponding to all LCGs in the one or more LCGs all expire, the triggered delay status report is canceled.

According to a communication method provided in this embodiment of this application, after the delay status report is triggered, the first timer is started. When the first timer is running or not configured, and a resource is available for the delay status report, the delay status report is assembled or sent. When the first timer expires, the triggered delay status report is canceled. Therefore, the delay status report may be assembled or sent when the resource is available, and the triggered delay status report is canceled when no resource is available, so as to reasonably process the triggered delay status report.

In addition to processing the delay status report based on whether the timer expires, the delay status report may also be processed based on the delay status information corresponding to the LCG in the triggered delay status report.

FIG. 11 is a schematic flowchart of still another communication method according to an embodiment of this application. In an example, the method may include the following steps.

S1101: Trigger a delay status report. The delay status report is used to indicate delay status information of first data.

For a specific implementation of triggering the delay status report, reference may be made to step S501 in the embodiment shown in FIG. 5. Details are not described herein again.

After the UE triggers the delay status report, one of the following steps S1102a or S1102b is selected to be performed for a specific case of the delay status information corresponding to each LCG in the triggered delay status report.

It should be noted that, before S1102a or S1102b is performed, S1101 may be performed or not performed. In an implementation, S1101, S1102a, or S1102b may be an independent solution. In an implementation, after S1101 is performed, S1102a or S1102b is performed.

S1102a: Cancel the triggered delay status report when delay status information of the triggered delay status report is less than or equal to a first threshold, or the delay status information of the delay status report is not within a value range of delay status information in a delay status table.

Further, when the delay status information corresponding to one or more first granularities in the triggered delay status report is less than or equal to the first threshold, or when the delay status information corresponding to one or more first granularities in the delay status report is not within the value range of delay status information in the delay status table, the triggered delay status report is canceled. One or more first granularities include all first granularities. In an example, the first granularity is an LCH/an LCG/a DRB/QoS/a PDU set/a data burst, and it may be obtained that the first granularity is a channel, a data flow, or a data set for transmission data.

In an example, in a case that the first granularity is a logical channel group, when the delay status information corresponding to one or more logical channel groups in the triggered delay status report is less than or equal to the first threshold, that is, a remaining time of one or more logical channel groups in the triggered delay status report used for sending data is less, the UE continues to assemble or send the delay status report and report to the network device, which has little meaning. Therefore, when the delay status information corresponding to the one or more logical channel groups in the triggered delay status report is less than or equal to the first threshold, the UE may cancel the triggered delay status report. For example, the delay status information corresponding to the one or more logical channel groups in the triggered delay status report is less than or equal to the first threshold, or the delay status information corresponding to all logical channel groups in the triggered delay status report is less than or equal to the first threshold.

In an implementation, the first threshold is a minimum value of the delay status information in the delay status report table, or the first threshold is a minimum value of the delay status information included in the delay status report. The delay status table may indicate a value range of the delay status information. The delay status table may include a plurality of index values, and one index value corresponds to a value range of one piece of delay status information, or the delay status table includes a plurality of pieces of delay status information. Therefore, the delay status table may indicate a value range of the delay status information. If the delay status table includes 1 ms, 2 ms, and 3 ms, the value range of the delay status information includes only three values. If the delay status table includes 1-3 ms, the value range of the delay status information includes values within 1-3 ms.

Another statement of S 1102a is that if the delay status information corresponding to one or more first granularities in the delay status report is not within the value range of delay status information in the delay status table, the triggered delay status report is canceled. Alternatively, if the delay status information corresponding to all first granularities in the triggered delay status report is not within the value range of delay status information in the delay status table, the triggered delay status report is canceled. In an implementation, the delay status information corresponding to the first granularity in the delay status report needs to be within the value range of delay status information in the delay status table. If the delay status information corresponding to the first granularity in the delay status report is not within the value range of delay status information in the delay status table, the delay status report does not include the delay status information of the first granularity. Further, if the delay status information corresponding to one or more first granularities in the triggered delay status report is not in a table range of the delay status report or is less than the first threshold, the delay status report does not include the delay status information corresponding to the first granularity and/or related data volume information.

Further, when the delay status information corresponding to all logical channel groups in the triggered delay status report is less than or equal to the first threshold, and no resource is available for the delay status report, the UE cancels the triggered delay status report.

Further, when the delay status information corresponding to all logical channel groups in the triggered delay status report is less than or equal to the first threshold, and a resource is available for the delay status report, the UE cancels the triggered delay status report.

S1102b: Assemble or send the delay status report when the delay status information of the triggered delay status report is greater than the first threshold, or the delay status information of the delay status report is within the value range of the delay status information in the delay status table.

Further, when the delay status information corresponding to one or more first granularities in the triggered delay status report is greater than the first threshold, or the delay status information corresponding to one or more first granularities in the delay status report is within the value range of the delay status information in the delay status table, the delay status report is assembled or sent.

When the delay status information corresponding to one or more logical channel groups in the triggered delay status report is greater than the first threshold, that is, the one or more LCGs still have valid delay status information used for sending data, the delay status report still needs to be reported. Therefore, when a resource is available for the delay status report, the delay status report is assembled or sent.

Further, the delay status information corresponding to one or more first granularities in the triggered delay status report is within the value range of the delay status information in the delay status table or is greater than the first threshold, the delay status report includes the delay status information corresponding to the first granularity and/or related data volume information, and the delay status information is filled in the delay status report. Therefore, the delay status information included in the delay status report should be greater than or equal to the first threshold, or the delay status information should be within the value range of the delay status information in the delay status table.

In an example, alternatively, when the delay status information corresponding to all logical channel groups in the triggered delay status report is less than the first threshold, the triggered delay status report is canceled. When the delay status information corresponding to one or more logical channel groups in the triggered delay status report is greater than or equal to the first threshold, the delay status report is assembled or sent.

In an example, the network device may configure the foregoing first threshold for the UE through at least one of the following information: an RRC signaling, an MAC-CE, or a DCI. The granularity of the first threshold may be of a UE granularity (per UE), or of an LCG granularity (per LCG), or of a MAC entity granularity (per MAC entity), or of an LCH granularity, or of a PDU set granularity, or of a DRB granularity, or of a QoS granularity, or of a data burst granularity.

For example, FIG. 12 is a schematic diagram of processing a triggered delay status report based on delay status information corresponding to an LCG. The network device configures that a first threshold=2 ms. When data is carried in LCG0 and LCG1, the delay status information corresponding to the LCG0 is less than 5 ms, and the delay status information corresponding to the LCG1 is less than 6 ms, the UE triggers the delay status report. When the UE triggers the delay status report, no resource is available for the delay status report. After the UE waits for 4 ms, a resource arrives. In this case, a residual delay of 1 ms for the LCG0 and a residual delay of 2 ms for the LCG1 are both less than or equal to the first threshold. Therefore, the delay status information reported by the UE is useless, and the triggered delay status reporting is canceled.

According to a communication method provided in this embodiment of this application, after the delay status report is triggered, it is determined whether the delay status information corresponding to one or more first granularities in the triggered delay status report may be used to determine how to process the triggered delay status report, so that the triggered delay status report may be reasonably processed.

In addition to processing the delay status report based on whether a timer expires and processing the delay status report based on the delay status information corresponding to the LCG in the triggered delay status report, the delay status report may also be processed based on the data volume information corresponding to the delay status information in the triggered delay status report.

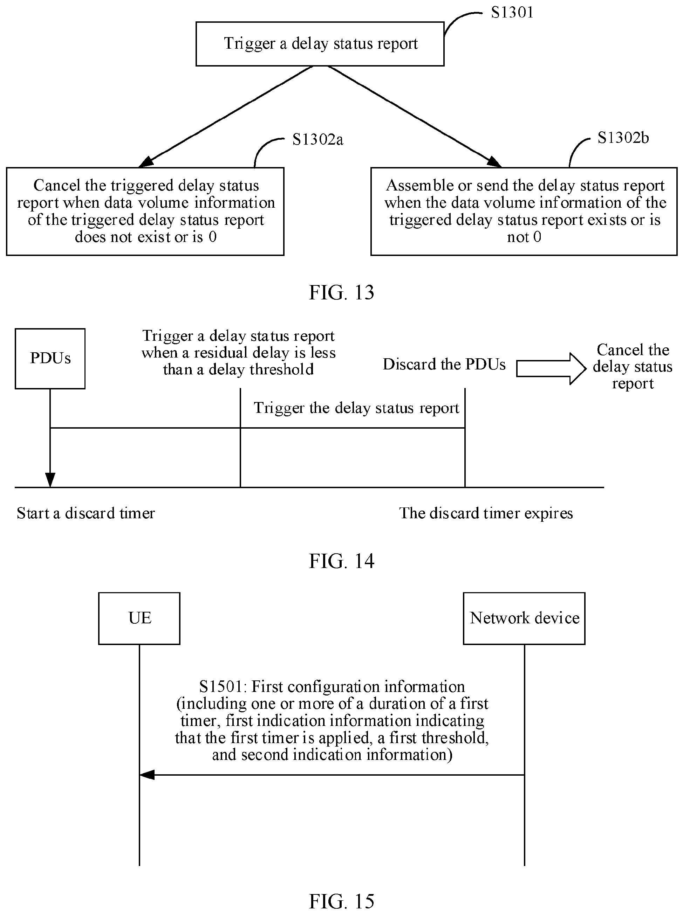

FIG. 13 is a schematic flowchart of still another communication method according to an embodiment of this application. In an example, the method may include the following steps.

S1301: Trigger a delay status report. The delay status report is used to indicate delay status information of first data.

For a specific implementation of triggering the delay status report, reference may be made to step S501 in the embodiment shown in FIG. 5. Details are not described herein again.

After the UE triggers the delay status report, one of the following steps S1302a or S1302b is selected to be performed for a specific case of the data volume information corresponding to the delay status information in the triggered delay status report.

It should be noted that, before S1302a or S1302b is performed, S1301 may be performed or not performed. In an implementation, S1301, S1302a, or S1302b may be an independent solution. In an implementation, after S1301 is performed, S1302a or S1302b is performed.

S1302a: Cancel the triggered delay status report when the data volume information of the triggered delay status report does not exist or is 0.

Further, when the data volume information corresponding to one or more pieces of delay status information in the triggered delay status report does not exist or is 0, or the data volume information corresponding to the first granularity in the delay status report does not exist or is 0, the triggered delay status report is canceled.

In a case, when an uplink resource may accommodate all uplink data, and the delay status information of the uplink data is less than a threshold, the triggered delay status report may be canceled. This case may be referred to as that data volume information does not exist. In other words, the data may be sent.

In a case, when all uplink data is discarded, and the delay status information of the uplink data is less than a threshold, the triggered delay status report may be canceled. This case may be referred to as that the data volume information does not exist or is 0.

The delay status report does not include delay status information in which data volume information does not exist or is 0.

In a first implementation, when the data volume information corresponding to one or more pieces of delay status information in the triggered delay status report does not exist or is 0, the triggered delay status report is canceled if the triggered delay status report is still pending. The delay status report is still pending, that is, neither canceled nor sent. In this case, the delay status report may be canceled.

In a second implementation, when the data volume information corresponding to one or more pieces of delay status information in the triggered delay status report does not exist or is 0, the triggered delay status report is canceled. The cancellation is of a delay status report granularity (per DSR). In this case, whether it is respectively determined whether the data volume information corresponding to one or more pieces of delay status information in the triggered delay status report does not exist or is 0, the delay status report is canceled.

In a third implementation, when data volume information corresponding to delay status information of one or more first granularities in the triggered delay status report does not exist or is 0, the triggered delay status report is canceled. The cancellation is of the first granularity. In an example, the first granularity is an LCH/an LCG/a DRB/QoS/a PDU set/a data burst, and it may be obtained that the first granularity is a channel, a data flow, or a data set for transmission data. In an example, in this case, when the data volume information corresponding to all delay status information in the delay status report of the triggered first granularity does not exist or is 0, the delay status report is canceled.

In a fourth implementation, when the data volume information corresponding to the delay status information of all first granularities in the triggered delay status report does not exist or is 0, the triggered delay status report is canceled. The cancellation is of the first granularity. In an example, the first granularity is an LCH/an LCG/a DRB/QoS/a PDU set/a data burst.

The first implementation to the fourth implementation above may be independent solutions or combined solutions.

FIG. 14 is a schematic diagram of discarding a protocol data unit (protocol data unit, PDU). After a PDCP layer receives a data packet (PDUs), a discard timer is started for the data packet. When the discard timer expires, the data packet is directly discarded. In an example, after the PDCP layer receives a data packet, the data packet is directly discarded if a priority corresponding to the data packet belongs to the first priority or is less than the first priority. After the received data packet is directly discarded, the PDCP layer does not perform operations such as adding a COUNT value to the data packet, header compression, or encryption.

When the residual delay of the data packet is less than a delay threshold, the UE may trigger the delay status report. When discarding the data packet, the UE may cancel the triggered delay status report. In other words, when the discard timer expires, the data volume information corresponding to all delay status information in the triggered delay status report does not exist (is discarded), and the UE reports that the delay status report is meaningless, the UE cancels the triggered delay status report.

S1302b: Assemble or send the delay status report when the data volume information of the triggered delay status report exists or is not 0.

When the data volume information corresponding to one or more pieces of delay status information in the triggered delay status report exists or is not 0, or the data volume information corresponding to the first granularity of the triggered delay status report exists or is not 0, the delay status report is assembled or sent.

In a first implementation, when the data volume information corresponding to one or more pieces of delay status information in the triggered delay status report exists or is not 0, and a resource is available for the delay status report, the delay status report is assembled or sent if the triggered delay status report is still pending.

In a second implementation, when the data volume information corresponding to one or more pieces of delay status information of the first granularity in the triggered delay status report exists or is not 0, and a resource is available for the delay status report, the delay status report is assembled or sent. The assembling or sending is of a delay status report granularity (per DSR). In this case, when it is respectively determined whether the data volume information corresponding to one or more pieces of delay status information in the triggered delay status report exists or is not 0, and a resource is available for the delay status report, the delay status report is assembled or sent.

In a third implementation, when the data volume information corresponding to one or more first granularities in the triggered delay status report exists or is not 0, and a resource is available for the delay status report, the delay status report is assembled or sent. The assembling or sending is of the first granularity. In an example, the first granularity is an LCH/an LCG/a DRB/QoS/a PDU set/a data burst, and it may be obtained that the first granularity is a channel, a data flow, or a data set for transmission data. In an example, in this case, when it is respectively determined whether the data volume information corresponding to all delay status information of the first granularity in the triggered delay status report exists or is not 0, and a resource is available for the delay status report, the delay status report is assembled or sent.

In a fourth implementation, when whether the data volume information corresponding to one or more first granularities in the triggered delay status report exists or is not 0, and a resource is available for the delay status report, the delay status report is assembled or sent. The assembling or sending is of the first granularity. In an example, the first granularity is an LCH/an LCG/a DRB/QoS/a PDU set/a data burst. In an example, in this case, when it is respectively determined whether the data volume information corresponding to one or more pieces of delay status information of the first granularity in the triggered delay status report exists or is not 0, and a resource is available for the delay status report, the delay status report is assembled or sent.

The first implementation to the fourth implementation above may be independent solutions or combined solutions.

In an example, before the discard timer expires, when the data volume information corresponding to one or more pieces of delay status information in the triggered delay status report exists or is not 0, that is, the PDCP layer has not completely discarded the data packet, and a resource is available for the delay status report, the delay status report may be assembled or sent.

According to a communication method provided in this embodiment of this application, after the delay status report is triggered, it is determined whether the data volume information corresponding to the delay status information in the triggered delay status report exists or is not 0, to determine how to process the triggered delay status report, so that the triggered delay status report may be reasonably processed.

In another embodiment, the delay status report may be processed with reference to the methods shown in FIG. 11 and FIG. 13. In a case, after the delay status report is triggered, when a resource is available for the delay status report, and the delay status information of the triggered delay status report is greater than the first threshold, or the delay status information of the delay status report is within the value range of the delay status information in the delay status table, and the data volume information of the triggered delay status report exists or is not 0, the delay status report is assembled or sent. In another case, after the delay status report is triggered, when no resource is available for the delay status report, and the delay status information of the triggered delay status report is less than or equal to the first threshold, or the delay status information of the delay status report is not within the value range of the delay status information in the delay status table, and the data volume information of the triggered delay status report does not exist or is 0, the triggered delay status report is canceled.

The duration of the first timer, the first indication information indicating that the first timer is applied, the first threshold, the second indication information, and the like involved in the foregoing embodiments may be configured by the network side. Detailed descriptions are provided below through an embodiment.

FIG. 15 is a schematic flowchart of still another communication method according to an embodiment of this application. In an example, the method may further include the following steps.

S1501: A network device sends first configuration information to a UE.

The first configuration information includes one or more of a duration of a first timer, first indication information indicating that the first timer is applied, a first threshold, and second indication information.

The second indication information is used to indicate whether to perform, based on a validity of a data volume of the delay status report, an operation of canceling a delay status report or assembling or sending the delay status report.

A configuration granularity of the duration of the first timer, the first indication information indicating that the first timer is applied, the first threshold and the second indication information may be a first granularity. The first granularity is an LCH/an LCG/a DRB/QoS/a PDU set/a data burst/an MAC entity, and a UE.

In an example, the network device may send the foregoing first configuration information through radio resource control (radio resource control, RRC) signaling, an MAC CE, downlink control information (downlink control information, DCI), or the like.

Correspondingly, the UE receives the first configuration information.

In a first implementation, the first configuration information includes the duration of the first timer. After receiving the first configuration information, the UE performs the foregoing step S601, S602a, or S602b. In other words, when triggering the delay status report, the UE starts or restarts the first timer, and determines, based on the first configuration information, whether the first timer expires. If the first timer expires, the UE cancels the triggered delay status report. If the first timer is running or not configured, the delay status report is assembled or sent when a resource is available for the delay status report.

In a second implementation, the first configuration information includes the first indication information indicating that the first timer is applied. After receiving the first configuration information, the UE performs the foregoing step S601, S602a, or S602b. In other words, when the UE triggers the delay status report, the UE starts or restarts the first timer, and determines whether the first timer expires if the first indication information is received. If the first timer expires, the UE cancels the triggered delay status report. If the first timer is running or not configured, the delay status report is assembled or sent when a resource is available for the delay status report.

In a third implementation, the first configuration information includes the first threshold. After receiving the first threshold, the UE performs the foregoing step S1101, S1102a, or S1102b. In other words, when the UE triggers the delay status report, it is determined whether the delay status information corresponding to one or more first granularities in the triggered delay status report is less than or equal to the first threshold. If yes, the UE cancels the triggered delay status report. Otherwise, the UE assembles or sends the delay status report.

In a fourth implementation, the first configuration information includes the second indication information. After receiving the second indication information, the UE performs the foregoing step S1301, S1302a, or S1302b. In other words, when the UE triggers the delay status report, the second indication information instructs the application to cancel the delay status report, assemble the delay status report, or send the delay status report based on a validity of a data volume of the delay status report, and if none of the data volume information corresponding to the one or more pieces of delay status information in the triggered delay status report exists or is 0, or none of the data volume information corresponding to the first granularity in the delay status report exists or is 0, the UE cancels the triggered delay status report. The UE assembles or sends the delay status report if the second indication information indicates that the data volume information corresponding to the one or more pieces of delay status information in the triggered delay status report is not 0, or the data volume information corresponding to the first granularity in the delay status report is not 0.

The first implementation to the fourth implementation above may be independent solutions or combined solutions.

According to a communication method provided in this embodiment of this application, the network device configures one or more of the duration of the first timer, the first indication information indicating that the first timer is applied, the first threshold, or the second indication information, so that the UE may determine to cancel the delay status report, or assemble or send the delay status report based on the configuration of the network device, thereby improving reliability of communication.

The communication method provided in embodiments of this application is mainly described above. Correspondingly, an embodiment of this application further provides a communication apparatus. The communication apparatus is configured to implement the foregoing methods. The communication apparatus may be the UE in the foregoing method embodiments, or may be a component that may be used for the UE. Alternatively, the communication apparatus may be the network device in the foregoing method embodiment, or may be a component that may be used for the network device. It may be understood that, to implement the foregoing functions, the communication apparatus includes a hardware structure and/or a software module for performing a corresponding function. A person skilled in the art should be easily aware that the units and algorithm steps in the examples described with reference to embodiments disclosed in this specification can be implemented in a form of hardware or a combination of hardware and computer software in this application. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method embodiments. For example, division into the function modules may be based on corresponding functions, or two or more functions may be integrated into one processing unit. The foregoing integrated module may be implemented in the form of hardware, or may be implemented in a form of a software functional module. It should be noted that, in embodiments of this application, the module division is an example, and is merely logical function division, and additional division manners may exist during actual implementation.

Based on a same concept of the foregoing communication method, this application further provides the following communication apparatus.

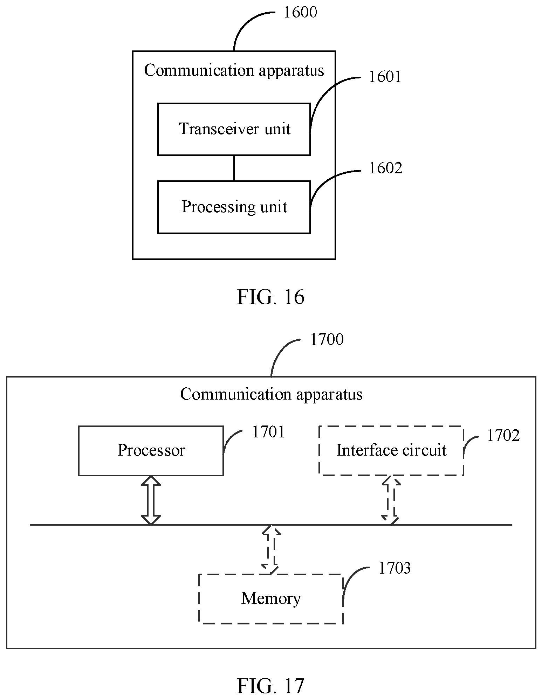

FIG. 16 is a schematic structural diagram of a communication apparatus according to an embodiment of this application. The communication apparatus 1600 includes a transceiver unit 1601 and a processing unit 1602.

When the communication apparatus is configured to implement the functions of the UE in the foregoing method embodiments, the processing unit 1602 is configured to perform an operation of S501, S502a, or S502b in the embodiment shown in FIG. 5. Alternatively, the processing unit 1602 is configured to perform an operation of S601, S602a, or S602b in the embodiment shown in FIG. 6. Alternatively, the processing unit 1602 is configured to perform an operation of S1101, S1102a, or S1102b in the embodiment shown in FIG. 11. Alternatively, the processing unit 1602 is configured to perform an operation of S1301, S1302a, or S1302b in the embodiment shown in FIG. 13. Alternatively, the transceiver unit 1601 is configured to perform an operation of the UE in S1501 in the embodiment shown in FIG. 15.

When the communication apparatus is configured to implement the functions of the network device in the foregoing method embodiments, the transceiver unit 1601 is configured to perform an operation of the network device in S1501 in the embodiment shown in FIG. 15.

For specific implementation of the transceiver unit 1601 and the processing unit 1602 above, reference may be made to descriptions in the foregoing method embodiments.

FIG. 17 is a schematic structural diagram of another communication apparatus according to an embodiment of this application. The communication apparatus 1700 includes one or more processors 1701 (one processor is illustrated in the figure). Optionally, the communication apparatus 1700 may further include a memory 1703 (which is represented by a dashed line in the figure). The memory 1703 is configured to store an instruction to be executed by the processor 1701, store input data required for the processor 1701 to run the instruction, or store data generated after the processor 1701 runs the instruction. Optionally, the communication apparatus 1700 may further include an interface circuit 1702 (which is represented by a dashed line in the figure). The processor 1701 and the interface circuit 1702 are coupled to each other. It may be understood that the interface circuit 1702 may be a transceiver or an input/output interface. The processor 1701 is configured to implement the functions of the processing unit 1602 in the embodiment shown in FIG. 16, and the interface circuit 1702 is configured to implement the functions of the transceiver unit 1601 in the embodiment shown in FIG. 16.

When the foregoing communication apparatus is a chip used for the UE, the chip implements the functions of the UE in foregoing method embodiments. The chip receives information from another module (for example, a radio frequency module or an antenna) in the UE, where the information is sent by a network device to the UE. Alternatively, the chip sends information to another module (for example, a radio frequency module or an antenna) in the UE, where the information is sent by the UE to the network device.

When the foregoing communication apparatus is a chip to be used in the network device, the chip implements the function of the network device in the foregoing method embodiments. The chip receives information from another module (for example, a radio frequency module or an antenna) in the network device, where the information is sent by the UE to the network device. Alternatively, the chip sends information to another module (for example, a radio frequency module or an antenna) in the network device, where the information is sent by the network device to the UE.

In addition, it should be noted that the foregoing transceiver unit and/or processing unit may be implemented through a virtual module. For example, the processing unit may be implemented through a software functional unit or a virtual apparatus, and the transceiver unit may be implemented through a software function or a virtual apparatus. Alternatively, the processing unit or the transceiver unit may be implemented through a physical apparatus. For example, if the apparatus is implemented through a chip/chip circuit, the transceiver unit may be an input/output circuit and/or a communication interface, to perform an input operation (corresponding to the foregoing receiving operation) and an output operation (corresponding to the foregoing sending operation). The processing unit is an integrated processor, a microprocessor, or an integrated circuit.

In this application, the module division is an example, and is merely logical function division, and additional division manners may exist during actual implementation. In addition, functional modules in examples of this application may be integrated into one processor, or may exist alone physically, or two or more modules may be integrated into one module. The foregoing integrated module may be implemented in the form of hardware, or may be implemented in a form of a software functional module.

It may be understood that, the processor in this embodiment of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or an instruction. When the computer program or the instruction is executed, the methods in the foregoing embodiments are implemented.

An embodiment of this application provides a computer program product including an instruction. The instruction, when executed on a computer, cause the computer to perform the methods in the foregoing embodiments.

An embodiment of this application further provides a communication system, including the foregoing communication apparatus.

An embodiment of this application further provides a circuit. The circuit is coupled to a memory. The circuit is configured to perform the methods in the foregoing embodiments. The circuit may include a chip circuit.

When the foregoing communication apparatus is a module used for a base station, the module in the base station implements the functions of the base station in the foregoing method embodiments. The module in the base station receives information from another module (for example, a radio frequency module or an antenna) in the base station, where the information is sent by a terminal device to the base station. Alternatively, the module in the base station sends information to another module (for example, a radio frequency module or an antenna) in the base station, where the information is sent by the base station to the terminal device. The module in the base station herein may be a baseband chip in the base station, or may be a CU, a DU or another module, or may be an apparatus in an open radio access network (open radio access network, O-RAN) architecture, for example, an open CU, an open DU, or another apparatus.

It should be noted that the foregoing units or one or more of the units may be implemented through software, hardware, or a combination thereof. When any one of the foregoing units or the units are implemented through software, the software exists in a form of a computer program instruction and is stored in a memory, and a processor may be configured to execute the program instruction and implement the foregoing method process.

In this application, the processor may be a general-purpose processor, a digital signal processor, an application specific integrated circuit, a field programmable gate array or another programmable logic device, a discrete gate or a transistor logic device, a discrete hardware component, or all or some of the circuits configured to implement a processing function in the foregoing devices. The processor may implement or execute the methods, the steps, and the logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

When the foregoing unit or the units are implemented through hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, which may run necessary software or does not rely on software to perform the foregoing method process.

Optionally, an embodiment of this application further provides a chip system, including one or more processors and an interface, where the one or more processors are coupled to a memory through the interface. When the one or more processors execute a computer program or an instruction in the memory, the chip system is enabled to execute the method in any one of the foregoing method embodiments. Optionally, the chip system may include a chip, or may include a chip and another discrete device. This is not specifically limited in embodiments of this application.

Alternatively, the memory in this application may be a circuit or any other apparatus that can implement a storage function, and is configured to store a program instruction and/or data. The memory is any other medium that can be configured to carry or store desired program code in the form of instructions or data structures and can be accessed by a computer, but is not limited thereto. For example, the memory may be a non-volatile memory such as a digital versatile disc (digital versatile disc, DVD), a hard disk drive (hard disk drive, HDD), or a solid-state drive (solid-state drive, SSD), or may be a volatile memory such as a random-access memory (random-access memory, RAM).

It should be understood that, in the description of this application, unless otherwise stated, "/" indicates that associated objects are in an "or" relationship. For example, A/B may represent A or B, where A and B may be singular or plural. In addition, in the description of this application, unless otherwise stated, "a plurality of" means two or more. "At least one of the following items (pieces)" or a similar expression thereof refers to any combination of these items, including any combination of singular items (pieces) or plural items (pieces). For example, at least one (piece) of a, b, or c may represent a, b, c, a-b, a-c, b-c, or a-b-c, where a, b, and c may be one or more. In addition, to clearly describe the technical solutions in embodiments of this application, words such as "first" and "second" are used in embodiments of this application to distinguish between same items or similar items whose functions and effects are substantially the same. A person skilled in the art may understand that the words such as "first" and "second" do not limit a number and an execution order, and the words such as "first" and "second" are unnecessarily different. In addition, in embodiments of this application, words such as "in an example" or "for example" are used to represent giving an example, an illustration, or a description. Any embodiment or design scheme described as "in an example" or "for example" in embodiments of this application should not be explained as being more preferred or advantageous over another embodiment or design scheme. Exactly, use of the words such as "in an example" or "for example" are intended to present a related concept in a specific manner, to facilitate understanding.

All or some of the foregoing embodiments may be implemented through software, hardware, firmware, or any combination thereof. When embodiments are implemented by using a software program, all or some of embodiments may be implemented in a form of a computer program product. The computer program product includes one or more computer instructions. When the computer program instructions are loaded and executed on the computer, the procedure or functions in embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired manner (for example, through a coaxial cable, an optical fiber, or a digital subscriber line (digital subscriber line, DSL)) or a wireless manner (for example, in an infrared, radio, or microwave manner).

Although this application is described with reference to embodiments, in a process of implementing this application that claims protection, a person skilled in the art may understand and implement another variation of the disclosed embodiments by viewing the accompanying drawings, disclosed content, and appended claims. In the claims, the term "comprising" (comprising) does not exclude another component or another step, and "a" or "one" does not exclude a case of plurality. A single processor or another unit may implement several functions enumerated in the claims. Some measures are recorded in dependent claims that are different from each other, but this does not indicate that these measures cannot be combined to produce a better effect.

It may be understood that various numerical numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

In the foregoing embodiments, the descriptions of each embodiment have different focuses, and for a part that is not described in detail in an embodiment, reference may be made to the relevant description of another embodiment.

The components of the apparatus of embodiments of this application may be merged, divided, and deleted based on an actual need. A person skilled in the art may integrate or combine different embodiments in this specification and features of the different embodiments.

In this application, under the premise of no logical contradiction, examples may be mutually referenced. For example, methods and/or terms between method embodiments may be mutually referenced. For example, functions and/or terms between apparatus embodiments may be mutually referenced. For example, functions and/or terms between apparatus examples and method examples may be mutually referenced.

## Claims

1. A communication method, comprising:
triggering a delay status report, wherein the delay status report is used to indicate delay status information of first data;
canceling the triggered delay status report when a first condition is satisfied; or
assembling or sending the delay status report when a second condition is satisfied.

2. The method according to claim **1,** further comprising: starting or restarting a first timer when the delay status report is triggered.

3. The method according to claim 2, wherein a duration of the first timer is used to indicate a validity period of the delay status report, or the first timer is used to cancel the delay status report, or the first timer is used to send or assemble the delay status report.

4. The method according to any one of claims 1 to 3, wherein the canceling the triggered delay status report when a first condition is satisfied comprises:
canceling the triggered delay status report when the first timer expires and the triggered delay status report is still pending; or
canceling the triggered delay status report when the first timer corresponding to the triggered delay status report expires; or
canceling the triggered delay status report when the first timers corresponding to all first granularities that trigger the delay status report expire; or
canceling the triggered delay status report when the first timers corresponding to one or more first granularities that trigger delay status report expire.

5. The method according to any one of claims 1 to 3, wherein the assembling or sending the delay status report when a second condition is satisfied comprises:
assembling or sending the delay status report if the triggered delay status report is still pending when the first timer is running or not configured, and a resource is available for the delay status report; or
assembling or sending the delay status report when the first timer corresponding to the triggered delay status report is running or not configured, and a resource is available for the delay status report; or
assembling or sending the delay status report when the first timers corresponding to all first granularities of the triggered delay status report are running or not configured, and a resource is available for the delay status report; or
assembling or sending the delay status report when the first timers corresponding to one or more first granularities of the triggered delay status report are running or not configured, and a resource is available for the delay status report.

6. The method according to any one of claims 2 to 5, wherein a value of a duration of the first timer is in a unit of any one of symbol, slot, sub-frame, or millisecond.

7. The method according to any one of claims 2 to 6, wherein the value of the duration of the first timer is not 0 milliseconds.

8. The method according to any one of claims 2 to 7, wherein the value of the duration of the first timer is less than or equal to a first threshold.

9. The method according to any one of claims 1 to 8, wherein the canceling the triggered delay status report when a first condition is satisfied comprises: canceling the triggered delay status report when delay status information of the triggered delay status report is less than or equal to the first threshold, or the delay status information of the delay status report is not within a value range of delay status information in a delay status table; or
the assembling or sending the delay status report when a second condition is satisfied comprises: assembling or sending the delay status report when the delay status information of the triggered delay status report is greater than the first threshold, or the delay status information of the delay status report is within the value range of the delay status information in the delay status table.

10. The method according to claim 9, wherein the canceling the triggered delay status report when delay status information of the triggered delay status report is less than or equal to the first threshold, or the delay status information of the delay status report is not within a value range of delay status information in a delay status table comprises: canceling the triggered delay status report when the delay status information corresponding to one or more first granularities in the triggered delay status report is less than or equal to the first threshold, or the delay status information corresponding to one or more first granularities in the delay status information is not within the value range of the delay status information in the delay status table; or
the assembling or sending the delay status report when the delay status information of the triggered delay status report is greater than the first threshold, or the delay status information of the delay status report is within the value range of the delay status information in the delay status table comprises: assembling or sending the delay status report when the delay status information corresponding to one or more first granularities in the triggered delay status report is greater than the first threshold, or the delay status information corresponding to one or more first granularities in the delay status report is within the value range of the delay status information in the delay status table.

11. The method according to any one of claims 1 to 10, wherein the canceling the triggered delay status report when a first condition is satisfied comprises: canceling the triggered delay status report when data volume information of the triggered delay status report does not exist or is 0; or
the assembling or sending the delay status report when a second condition is satisfied comprises: assembling or sending the delay status report when data volume information of the triggered delay status report exists or is not 0.

12. The method according to claim 11, wherein the canceling the triggered delay status report when data volume information of the triggered delay status report does not exist or is 0 comprises: canceling the triggered delay status report when data volume information corresponding to one or more pieces of delay status information in the triggered delay status report does not exist or is 0, or data volume information corresponding to the first granularity in the triggered delay status report does not exist or is 0; or
the assembling or sending the delay status report when data volume information of the triggered delay status report exists or is not 0 comprises: assembling or sending the delay status report when data volume information corresponding to one or more pieces of delay status information in the triggered delay status report exists or is not 0, or data volume information corresponding to the first granularity in the triggered delay status report exists or is not 0.

13. The method according to claim 12, wherein the canceling the triggered delay status report when data volume information corresponding to the first granularity in the triggered delay status report does not exist or is 0 comprises:
canceling the triggered delay status report when data volume information corresponding to delay status information of one or more first granularities in the triggered delay status report does not exist or is 0; or
canceling the triggered delay status report when the data volume information corresponding to the delay status information of all first granularities in the triggered delay status report does not exist or is 0.

14. The method according to claim 12, wherein the assembling or sending the delay status report when data volume information corresponding to the first granularity in the triggered delay status report exists or is not 0 comprises:
assembling or sending the delay status report when the data volume information corresponding to all delay status information of the first granularity in the triggered delay status report exists or is not 0, and a resource is available for the delay status report; or
assembling or sending the delay status report when the data volume information corresponding to one or more pieces of delay status information of the first granularity in the triggered delay status report exists or is not 0, and a resource is available for the delay status report.

15. The method according to any one of claims 4 to 14, wherein the first granularity comprises at least one of a logical channel, a logical channel group, a data radio bearer, quality of service, a protocol data unit set, a data burst set, a medium access control entity, or a terminal device.

16. The method according to any one of claims 1 to 15, wherein the delay status information comprised in the delay status report is greater than or equal to the first threshold, or the delay status information comprised in the delay status report needs to be within the value range of the delay status information in the delay status table.

17. The method according to any one of claims 1 to 16, wherein when the delay status information of the first data is less than or equal to a second threshold, the delay status report is triggered.

18. A communication method, comprising:
receiving first configuration information, wherein the first configuration information comprises one or more of the duration of the first timer according to any one of claims 2 to 8, first indication information indicating that the first timer is applied, the first threshold according to claim 9 or 10, or second indication information, and the second indication information is used to indicate whether to perform, based on a validity of a data volume of the delay status report, an operation of canceling a delay status report or assembling or sending the delay status report.

19. A communication method, comprising:
sending first configuration information, wherein the first configuration information comprises one or more of the duration of the first timer according to any one of claims 2 to 8, first indication information indicating that the first timer is applied, the first threshold according to claim 9 or 10, or second indication information, and the second indication information is used to indicate whether to perform, based on a validity of a data volume of the delay status report, an operation of canceling a delay status report or assembling or sending the delay status report.

20. A communication apparatus, comprising a module for implementing the method according to any one of claims 1 to 19.

21. A communication apparatus, comprising a memory, a processor, and a computer program stored in the memory and executable on the processor, wherein when the processor executes the computer program, the method according to any one of claims 1 to 19 is implemented.

22. A chip, configured to perform the method according to any one of claims 1 to 19.

23. A chip module, comprising an interface component and a chip, wherein the chip is configured to perform the method according to any one of claims 1 to 19.

24. A computer-readable storage medium, storing a computer program or an instruction, wherein when the computer program or the instruction is executed by a communication apparatus, the method according to any one of claims 1 to 19 is implemented.
